# EUROPEAN PATENT SPECIFICATION

(11) **EP 3 697 615 B1**
(45) Date of publication and mention of the grant of the patent: **03.07.2024**
(21) Application number: 18789141.1
(22) Date of filing: 18.10.2018
(51) Int. Cl.: B32B 37/12, E04B 1/80, F16L 59/02

(54) **USE OF ADHESIVE IN PARTICULATE FORM**
VERWENDUNG VON KLEBSTOFF IN PARTIKELFORM
UTILISATION D'UN ADHÉSIF SOUS FORME PARTICULAIRE

(30) Priority: 19.10.2017 GB 201717160; 05.06.2018 GB 201809180
(43) Date of publication of application: 26.08.2020
(73) Proprietor: Knauf Insulation SPRL, 4600 Visé (BE)
(72) Inventor: MARTIN, Nicolas, 1435 Mont Saint Guibert (BE); LERAT, Cyrille, 1435 Mont Saint Guibert (BE)
(74) Representative: ARC-IP
(86) International application number: PCT/EP2018/078631
(87) International publication number: WO 2019/077072

(56) References cited:
- CA-A1- 2 674 986
- US-A1- 2013 291 990
- US-A1- 2016 061 375

## Description

This invention relates to the use of an adhesive in particulate form for securing a facing to a main surface of a mineral wool blanket.

The invention is particularly useful in relation to a mineral wool insulating product which comprises a blanket of mineral fibres, for example glass fibres and/or stone fibres. The fibres of such products are generally held together by a binder dispersed within the blanket to form a self-supporting blanket. The mineral wool fibre insulating product may be used as thermal and/or acoustic insulation, for example for buildings, or as insulated ducting, for example in heating or air conditioning systems.

Insulation products of this type are generally provided either as continuous lengths generally packaged as a roll or individual panels, or batts. A facing is often provided on one or both major surfaces of the insulation product. Depending upon the intended use, the facing may be permeable or may provide a gas and/or vapour barrier, and/or may have other functionalities including an encapsulation function and/or a reinforcing function and/or provide a soft touch or feel to the product. For example, a non-woven veil provided as a facing may be used to provide reinforcement and/or facilitate handling of the mineral wool blanket and a facing comprising a PET layer may be used to provide a vapour-barrier. CA2674986 discloses a non-combustible, sound-absorbing facing and a laminate comprising the facing. US2016/061375 discloses a duct liner comprising an insulating layer and a fiberglass mat facing disposed on the first face surface of the insulating layer. US2013/291990 discloses a duct insulation laminate comprising an insulation layer and a facing.

Facings are usually secured to the mineral wool blanket with:
- a curable adhesive; or
- a hot melt adhesive;
often applied in liquid form, for example in the form of a layer, notably a continuous layer or in the form of strips. However, the peel strength of facings attached with such systems has often proved to be less that desired, even when using significant quantities of adhesive. Indeed, the nature of the surface of the mineral wool blanket which is made up of a network of individual fibres separated by interstices results in particular challenges for ensuring desired levels of adhesion.

One aim of the present invention is to allow a facing to be secured to a mineral wool blanket in a way which provides advantageous levels of adhesion without requiring higher amount of adhesives and in a way that can be more easily implemented in an industrial mineral wool manufacturing process.

In accordance with one of its aspects, the present invention provides the use of an adhesive as defined in claim 1. The dependent claims define preferred and/or alternative embodiments

The facing may comprise, consist or consist essentially of: a glass veil, a woven veil, a woven glass veil, a non-woven veil, a non-woven glass veil, a coated veil, a kraft layer, a metallised layer, an aluminium layer, a PET layer, a plastics layer, a polymer layer, a polyethylene (PE) layer or a fibrous reinforcing scrim. The facing may comprise a plurality of different or identical layers, notably selected from the aforementioned. For example, the facing may comprise sequential layers of:
- an aluminum layer, a PET layer and a reinforcing scrim; or
- an aluminum layer, a PET layer and a kraft layer.

Alternatively, the facing may comprise a coated glass veil, notably a coated glass veil comprising a glass veil and an acrylic coating. The facing may also comprise a colouring agent and/or a filler, notably a colouring agent or a filler which darkens the colour of the facing. Preferably, the colouring agent provides a substantially black facing. Alternatively, the facing may be transparent or translucent.

The thickness of the facing may be ≥ 0.1 mm or ≥ 0.3 mm and/or ≤ 0.8 mm or ≤ 0.6 mm. Particularly when the facing comprises or consists essentially of a glass veil, the thickness of the facing may be ≥ 0.3 mm and ≤ 0.6 mm. The method has been found to be particularly useful for securing such facings in a way which provides high peel strength whilst permitting the facing to conform to the surface of the mineral wool and retain desired flexibility.

The facing may have a surface weight ≥ 30 g/m² or ≥ 50 g/m² and/or ≤ 150g/m² or ≤ 350 g/m². In one preferred embodiment of the invention, the facing comprises or consists essentially of a non-woven veil, notably a glass non-woven veil. Particularly where the facing is a woven facing, it may have a surface weight of in the range 100-150 g/m². Particularly when non-woven, the veil may have a surface weight of in the range 20-60 g/m².

As used herein, the term "consist essentially of" is intended to limit a definition or the scope of a claim to the specified materials or steps and those that do not materially affect the basic and novel characteristic(s) of the claimed invention.

The facing and/or one or more of its constituent parts, may comprise a fire or flame retardant. The insulation product may have a fire rating of A2 in accordance with EN 13501. In a preferred embodiment, the mineral wool insulating product has a fire rating of A1 in accordance with EN 13501, in force at the priority date of the present patent application. The ability to secure the facing using a small quantity of adhesive facilitates this.

As used herein, the term "particulate form" means in the form of solid particles.

The adhesive in particulate form may be selected from: polyethylene, polypropylene, copolyester PES, EVA, epoxy-polyester, a thermosetting adhesive and combination thereof.

The adhesive in particulate form may be applied to the facing by projection, for example by spraying the adhesive in particulate form towards and/or on to a major surface of the facing. The adhesive in particulate form may be applied to the facing by coating, for example by roller coating.

The amount of adhesive applied to the facing may be ≥ 5g/m² or ≥ 10g/m² and/or ≤ 30g/m² or ≤ 25g/m² or ≤ 20g/m² or ≤ 15g/m².

It has surprisingly been found that use of an adhesive in particulate form to secure the facing to the mineral wool blanket, particularly preferred adhesives, notably in the preferred quantities described herein, provides for an advantageous combination of:
i) good peel strength;
ii) homogeneity of peel strength over the surface of the mineral wool; and
iii) absence of undesired leakage of adhesive through the facing and/or at the edges of the facing,
with quantities of adhesive which are less that that that would be required to achieve equivalent properties using prior art adhesives. Whilst not wishing to be bound by theory, one possible explanation is that the adhesive in particulate form provides a form and/or distribution of adhesive on the major surface of the facing, notably once heated, which is particularly compatible with the surface structure of the mineral wool blanket.

Furthermore, use of an adhesive in particulate form may be used to reduce the duration during which heat is applied and thus to secure the facing more quickly than would be possible with a liquid adhesive and/or provide an adhesive system which is more tolerant to manufacturing variations.

The adhesive in particulate form may have a particle size such that ≥ 70%, ≥ 80% or ≥ 90 % by weight of the particles have a particle size in the range: 20 µm to 550 µm; 20 µm to 350 µm; 20 µm to 150 µm; 70 µm to 350 µm; or 90 µm to 550 µm. The adhesive in particulate form may have an average particle size in the range 20-550µm, preferably in the range 20-350µm, more preferably in the range 20-150µm, even more preferably in the range 70-150µm.

The adhesive in particulate may be secured to the facing by applying heat to the adhesive and/or to the facing. Heat may be provided by a heated drum and/or one or more infrared heater(s) and/or by passing the facing through an oven. The parameters for temperature and duration during which the adhesive is exposed to heat are selected to secure the adhesive to the facing without damaging the facing. For example, when the adhesive is a thermoset adhesive, the parameters will be selected to avoid completely curing the thermoset adhesive. Preferably, the adhesive in particulate form is secured to the facing by applying a temperature of ≥ 50°C and preferably of ≤ 250°C.

Securing of the adhesive in particulate form to the major surface of the facing provides an adhesive coated surface at the major surface of the facing. As used herein, the term "adhesive coated surface" means a surface to which an adhesive, notably such that the adhesive can serve to secure the surface to, for example, the mineral wool blanket. The adhesive coated surface of the facing may be formed so as to provide a facing which can be packaged, notably by rolling the facing, more notably in the form of a cylinder and subsequently unpackaged and unrolled prior to securing the adhesive coated surface of the facing to one of the main surfaces of the mineral wool blanket. The packaged facing may thus be stored and/or transported to a different site for use. The facing and/or the adhesive in particulate form may be selected for a particular type of mineral wool blanket such the different types of mineral wool blanket are manufactured using different types of facing and/or particulate adhesive. Off line manufacture of the facing provided with the particulate adhesive on an adhesive coated surface facilitates such variations and optimisations.

The adhesive coated surface of the facing may be secured to the mineral wool blanket prior to or subsequent to possible passage of the mineral wool through a curing oven to cure any binder in the mineral wool blanket. Notably when the particulate adhesive comprises a thermoplastic, for example a thermoplastic selected from polyethylene, polypropylene, copolyester PES, EVA and epoxy-polyester, the facing may be secured to the mineral wool blanket subsequent to any passage of the mineral wool blanket through a curing oven. The facing may be pressed between a main surface of the mineral wool blanket and a heated drum. The heated drum may have a surface temperature of ≥ 40°C, preferably ≥ 50°C. The facing may be pressed for duration which is ≥ 2 seconds, preferably ≥ 10 seconds and/or preferably ≤ 30 seconds. Notably when the adhesive comprises a thermosetting adhesive, the facing may be applied on the mineral wool blanket prior to passage of the mineral wool blanket through a curing oven. Passage of the mineral wool blanket through the curing oven may thus cure the binder present in the mineral wool blanket and secure the facing to the mineral wool blanket, notable by curing the particulate adhesive when the adhesive coated surface is in contact with a major surface of the mineral wool blanket. When passing through a curing oven, a portion of the curing oven may have a temperature of ≥ 180°C, preferably of ≥ 200°C. The time during which the facing is exposed to a temperature of ≥ 180°C, preferably of ≥ 200°C may be ≥ 20 seconds, preferably ≥ 130 seconds and/or preferably ≤ 5 minutes.

The mineral wool blanket may comprise ≥ 80%wt, preferably ≥ 90%wt, more preferably ≥ 95%wt of mineral wool fibres. The mineral wool fibres may comprise glass wool fibres and/or stone wool fibres (also called rock wool fibres). The glass mineral wool fibres may comprise: > 55 wt-% silicon oxide (SiO₂) and/or < 10 wt-% aluminium oxide (Al₂O₃); and/or an alkali/alkaline-earth ratio of their composition which is > 1; and/or a combined quantity of CaO and MgO < 20 wt-%; and/or a combined quantity of Na₂O and K₂O > 8%wt. The glass wool fibres may have a softening point in the range 600-750°C, notably in the range 650-700°C. The stone mineral fibres may comprise: between 30 and 55 wt-% SiO₂ and/or between 10 and 30 wt-% Al₂O₃; and/or an alkali/alkaline-earth ratio of their composition which is < 1; and/or a combined quantity of CaO and MgO ranging from 20 to 35 wt-%; and/or a combined quantity of Na₂O and K₂O < 8 wt%; and/or a total iron content expressed as Fe₂O₃ of between 4 and 10 wt-%. The stone wool fibres may have a softening point in the range 900-1200°C, notably in the range 1000-1100°C. The amount of shots (or beads) in the mineral wool blanket may be ≤ 1 %wt, a shot being defined as a particle having a largest apparent diameter of less than 60µm.

The mineral wool blanket and/or the mineral wool insulating product may have a thickness in the range from 20 to 300 mm, especially in the range from 60 to 260 mm. It may have a density which is ≥ 8 kg/m³, ≥ 10 kg/m³ or ≥ 15 kg/m³ and/or ≤ 250 kg/m³, ≤ 200 kg/m³, ≤ 180 kg/m³ or ≤ 120 kg/m³. Notably when the mineral wool blanket comprises glass wool fibres, the density of the mineral wool blanket may be in the range 8-55 kg/m³, preferably in the range 10-40 kg/m³. Notably when the mineral wool blanket comprises stone wool fibres, the density of the mineral wool blanket may in the range 25-250 kg/m³, notably in the range 50-120 kg/m³. The present invention provides a method which is adapted to secure a facing to a mineral wool blanket having any of the aforementioned densities; the compatibility with lower density mineral wool blankets to which securing of a facing is often more problematic is particularly advantageous.

The mineral wool insulating product may comprise ≥ 50%wt, ≥ 60%wt, ≥ 70%wt, ≥ 80%, ≥ 90% or ≥ 95% of mineral fibres. The mineral wool fibres may have an average diameter of ≤ 10µm or ≤ 8 µm, for example in the range from 3 to 6µm. The mineral wool fibres may have a length of ≤ 1 cm or ≤ 500 µm or ≤ 100 µm or ≤ 50 µm.

A peel test comprising removing a facing that has been secured to the mineral wool blanket by peel the facing away from the mineral wool blanket may be used to assess the level of adhesion between the facing and mineral wool blanket. When the facing is removed from the mineral wool blanket in a peel test, the proportion of the surface area of the facing to which mineral wool fibres remain secured may be ≥ 70%, preferably ≥ 80%, more preferably ≥ 90% and even more preferably ≥ 95% of the total surface of the facing. This retention of fibres to the facing during a peel test indicates that failure occurs in the body of the mineral wool blanket rather than at the interface between the mineral wool blanket and the facing.

In a preferred embodiment, the method of manufacturing comprises applying a thermoset adhesive, notably an epoxy-polyester adhesive, in particulate form to a major surface of a facing comprising a glass veil, subsequently securing the thermoset adhesive in particulate form to the major surface of the facing comprising a glass veil by applying heat to provide an adhesive coated surface of the facing and then securing the adhesive coated surface of the facing comprising a glass veil to one of the main surfaces of a glass wool mineral wool blanket, by application of heat and pressure, notably by a heated drum.

An embodiment of the invention will now be described, by way of example only with reference to the accompanying drawing of which:
Fig. 1 is an image of a facing removed by a peel test from a mineral wool blanket not in accordance with the invention; and
Fig. 2 is an image of a facing removed by a peel test from a mineral wool blanket in accordance with the invention.

A glass veil having an area weight of about 60 g/m² is positioned on a conveyor. The veil comprises glass fibres with a cured urea extended formaldehyde resin and a black pigment.

A thermoset adhesive in particulate form for which ≥ 90% of the particles by weight have a particle size in the range 20 µm to 550 µm is deposed over substantially the entire major surface of the glass veil in an amount of about 10g/m². The thermoset adhesive in particulate form (Starpow 100 from Dakota) is then secured to the major surface of the glass veil by passing the uncoated surface of the facing over a heated calender held at a temperature of about 125°C, which partially melts and secures the particulate adhesive to provide a glass veil having an adhesive coated surface.

The glass veil with the adhesive coated surface is cooled at ambient temperature (about 20°C) before being packaged by rolling the glass veil in the form of a cylinder. The packaged glass veil is transported to a different location where it is unpackaged and unrolled.

The glass veil is then applied to the major upper surface of a glass wool blanket running continuously on a conveyor, the blanket comprising freshly formed glass fibres 2 and uncured binder. The glass veil and the glass wool blanket pass through a curing oven, the glass veil being pressed against a major surface of the mineral wool blanket by the flights of the curing oven. The temperature in the curing oven (up to about 250°C) cures the binder of the mineral wool blanket and secures the facing to the major surface of the mineral wool blanket via the particulate adhesive. The glass wool mineral wool blanket has a density of about 19.5 kg/m³.

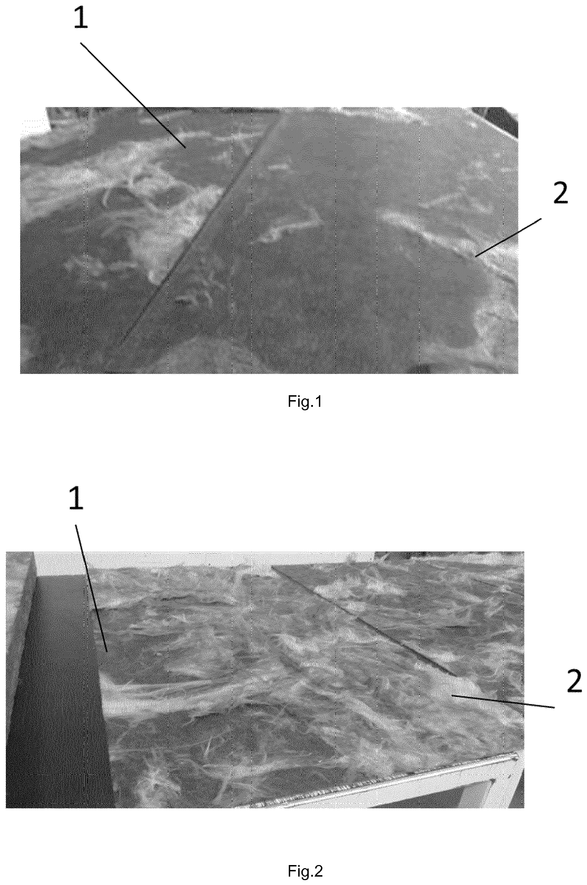

Once fully cooled having passed through the curing oven, the facing 1 of the glass wool mineral wool blanket is removed by hand in a peel test. The surface of the facing that had been attached to the mineral wool blanket is shown in Fig.2.

A second glass wool mineral wool blanket was manufactured in the same way, other than the adhesive used to secure the facing to the mineral wool blanket. In the case of the second mineral wool blanket, the facing was secured to the mineral wool blanket by a PVOH adhesive applied to the facing as a liquid in the form of bands having a width of 5 mm spaced by a distance of 80mm just before application of the facing to the mineral wool blanket and passage through the curing oven. Once fully cooled having passed through the curing oven, the facing 1 of the glass wool mineral wool blanket is removed by hand in a peel test. The surface of the facing that had been attached to the mineral wool blanket is shown in Fig.1.

In Fig.2 the portion of the surface area of the facing to which the fibres are still secured after the peel test is about 75% of the total surface area, whilst the portion in Fig. 1 is less than 25%.

## Claims

1. Use of an adhesive in particulate form for securing a facing to a main surface of a mineral wool blanket and wherein the use of the adhesive is a use to provide high peel strength whilst permitting the facing to conform to the surface of the mineral wool and retain desired flexibility when securing the facing to the main surface of a mineral wool blanket;
and wherein the facing is secured by a method of manufacturing a mineral wool insulating product comprising a mineral wool blanket having a facing secured to one of its main surfaces, the method comprising securing an adhesive coated surface of the facing to one of the main surfaces of the mineral wool blanket by application of heat and pressure wherein the adhesive coated surface of the facing comprises an adhesive in particulate form;
and in which the method comprises, sequentially:
a) applying the adhesive in particulate form to a major surface of the facing;
b) securing the adhesive in particulate form to the major surface of the facing by applying heat to provide the adhesive coated surface of the facing;
c) the securing of the adhesive coated surface of the facing to the one of the main surfaces of the mineral wool blanket by application of heat and pressure.

2. Use in accordance with claim 1, wherein the facing is secured by a method further comprising
packaging the facing to which the adhesive in particulate form has been secured, notably by rolling the facing in the form of a cylinder and subsequently unpackaging the facing prior to securing the adhesive coated surface of the facing to one of the main surfaces of the mineral wool blanket by application of heat and pressure.

3. Use in accordance with any preceding claim,
in which the adhesive in particulate form is selected from: polyethylene, polypropylene, copolyester PES, EVA, epoxy-polyester, a thermosetting adhesive and combination thereof.

4. Use in accordance with claim 3,
in which the adhesive in particulate form comprises a thermosetting adhesive; and in which securing the adhesive coated surface of the facing to one of the main surfaces of the mineral wool blanket by application of heat and pressure comprises curing the thermosetting adhesive.

5. Use in accordance with any preceding claim,
in which securing the adhesive coated surface of the facing to one of the main surfaces of the mineral wool blanket is carried out by passing the mineral wool blanket and the facing through a curing oven, notably passing the mineral wool blanket and the facing through a portion of the curing oven at a temperature of ≥ 180°C, preferably of ≥ 200°C for a duration which is ≥ 20 seconds, preferably ≥ 130 seconds and preferably ≤ 5 minutes.

6. Use in accordance with any preceding claim,
in which securing the adhesive coated surface of the facing to one of the main surface of the mineral wool blanket comprises pressing the facing between the mineral wool blanket and heated drum.

7. Use in accordance with claim 6,
in which the heated drum has a surface temperature of ≥ 40°C, preferably ≥ 50°C and in which the facing is pressed between the mineral wool blanket and heated drum for a duration which is ≥ 2 seconds, preferably ≥ 10 seconds and preferably ≤ 30 seconds.

8. Use in accordance with any preceding claim,
in which securing the adhesive in particulate form to the major surface of the facing comprises heating the adhesive in particulate form to a temperature which is ≥ 50°C and preferably ≤ 250°C.

9. Use in accordance with any preceding claim,
in which the adhesive in particulate form is selected from:
i) an adhesive in particulate form which has a particle size such that ≥ 90% by weight of the particles have a particle size in the range: 20 µm to 550 µm; 20 µm to 350 µm; 20 µm to 150 µm; 70 µm to 350 µm; or 90 µm to 550 µm; and
ii) an adhesive in particulate form which has an average particle size in the range 20-550µm.

10. Use in accordance with any preceding claim,
in which the amount of adhesive in particulate form applied to the facing is ≥ 5g/m² and preferably ≤ 30g/m².

11. Use in accordance with any preceding claim,
in which the facing comprises a woven veil, a woven glass veil, a non-woven veil, a non-woven glass veil, a coated veil, a kraft layer, a metallised layer, an aluminium layer, a PET layer and/or a fibrous reinforcing scrim.

12. Use in accordance with any preceding claim,
in which the facing comprises a colouring agent which darkens the facing.

13. Use in accordance with any preceding claim,
in which, prior to application of the adhesive in particulate form, the facing has a surface weight in the range 30 g/m² to 350 g/m²; preferably in the range 50 g/m² to 150 g/m².

14. Use in accordance with any preceding claim, wherein the facing comprises or consists essentially of a glass veil and having a thickness which is ≥ 0.3 mm and ≤ 0.6 mm.

15. Use in accordance with any preceding claim, wherein when the facing is removed from the mineral wool blanket in a peel test, the proportion of the surface area of the facing to which mineral wool fibres remain secured is ≥ 70%, preferably ≥ 80%, more preferably ≥ 90% and even more preferably ≥ 95% of the total surface of the facing.

## Patentansprüche

1. Verwendung eines Haftmittels in Teilchenform zum Befestigen einer Verkleidung an einer Hauptoberfläche einer Mineralwolldecke, und wobei die Verwendung des Haftmittels eine Verwendung ist, um eine hohe Schälfestigkeit bereitzustellen, während es der Verkleidung ermöglicht wird, sich an die Oberfläche der Mineralwolle anzupassen und die gewünschte Flexibilität beizubehalten, wenn die Verkleidung an der Hauptoberfläche einer Mineralwolldecke befestigt wird;
und wobei die Verkleidung durch ein Herstellungsverfahren eines Mineralwolledämmprodukts befestigt wird, das eine Mineralwolldecke mit einer an einer ihrer Hauptoberflächen befestigten Verkleidung umfasst, wobei das Verfahren das Befestigen einer haftmittelbeschichteten Oberfläche der Verkleidung an einer der Hauptoberflächen der Mineralwolldecke unter Verwendung von Wärme und Druck umfasst, wobei die haftmittelbeschichtete Oberfläche der Verkleidung ein Haftmittel in Teilchenform umfasst;
und wobei das Verfahren nacheinander umfasst:
a) Aufbringen des Haftmittels in Teilchenform auf eine wesentliche Oberfläche der Verkleidung;
b) Befestigen des Haftmittels in Teilchenform an der wesentlichen Oberfläche der Verkleidung durch Verwenden von Wärme, um die haftmittelbeschichtete Oberfläche der Verkleidung bereitzustellen;
c) Befestigen der haftmittelbeschichteten Oberfläche der Verkleidung an der einen der Hauptoberflächen der Mineralwolldecke unter Verwendung von Wärme und Druck.

2. Verwendung nach Anspruch 1, wobei die Verkleidung durch ein Verfahren befestigt wird, das weiter das Verpacken der Verkleidung, an welcher das Haftmittel in Teilchenform befestigt wurde, umfasst, insbesondere durch Rollen der Verkleidung in die Form eines Zylinders und anschließendes Auspacken der Verkleidung vor dem Befestigen der haftmittelbeschichteten Oberfläche der Verkleidung an einer der Hauptoberflächen der Mineralwolldecke unter Verwendung von Wärme und Druck.

3. Verwendung nach einem der vorhergehenden Ansprüche, wobei das Haftmittel in Teilchenform ausgewählt ist aus: Polyethylen, Polypropylen, Copolyester PES, EVA, Epoxy-Polyester, einem wärmehärtenden Haftmittel und einer Kombination davon.

4. Verwendung nach Anspruch 3, wobei das Haftmittel in Teilchenform ein wärmehärtendes Haftmittel umfasst; und wobei das Befestigen der haftmittelbeschichteten Oberfläche der Verkleidung an einer der Hauptoberflächen der Mineralwolldecke unter Verwendung von Wärme und Druck das Aushärten des wärmehärtenden Haftmittels umfasst.

5. Verwendung nach einem der vorhergehenden Ansprüche, wobei das Befestigen der haftmittelbeschichteten Oberfläche der Verkleidung an einer der Hauptoberflächen der Mineralwolldecke durchgeführt wird, indem die Mineralwolldecke und die Verkleidung durch einen Aushärteofen geführt werden, wobei insbesondere die Mineralwolldecke und die Verkleidung durch einen Abschnitt des Aushärteofens bei einer Temperatur von ≥ 180°C, vorzugsweise von ≥ 200°C für eine Dauer von ≥ 20 Sekunden, vorzugsweise ≥ 130 Sekunden und vorzugsweise ≤ 5 Minuten, geführt werden.

6. Verwendung nach einem der vorhergehenden Ansprüche, wobei das Befestigen der haftmittelbeschichteten Oberfläche der Verkleidung an einer der Hauptoberflächen der Mineralwolldecke das Pressen der Verkleidung zwischen der Mineralwolldecke und beheizten Trommel umfasst.

7. Verwendung nach Anspruch 6, wobei die beheizte Trommel eine Oberflächentemperatur von ≥ 40°C, vorzugsweise ≥ 50°C aufweist und wobei die Verkleidung zwischen der Mineralwolldecke und beheizten Trommel für eine Dauer von ≥ 2 Sekunden, vorzugsweise ≥ 10 Sekunden und vorzugsweise ≤ 30 Sekunden gepresst wird.

8. Verwendung nach einem der vorhergehenden Ansprüche, wobei das Befestigen des Haftmittels in Teilchenform an der wesentlichen Oberfläche der Verkleidung das Erwärmen des Haftmittels in Teilchenform auf eine Temperatur von ≥ 50°C und vorzugsweise ≤ 250°C umfasst.

9. Verwendung nach einem der vorhergehenden Ansprüche, wobei das Haftmittel in Teilchenform ausgewählt ist aus:
i) einem Haftmittel in Teilchenform, welches eine Teilchengröße aufweist, so dass ≥ 90 Gew.-% der Teilchen eine Teilchengröße im Bereich von: 20 µm bis 550 µm 20 µm bis 350 µm 20 µm bis 150 µm 70 µm bis 350 µm oder 90 µm bis 550 µm aufweisen und
ii) einem Haftmittel in Teilchenform, welches eine durchschnittliche Teilchengröße im Bereich von 20-550 µm aufweist.

10. Verwendung nach einem der vorhergehenden Ansprüche, wobei die Menge des Haftmittels in Teilchenform, die auf die Verkleidung aufgebracht wird, ≥ 5g/m² und vorzugsweise ≤ 30g/m² beträgt.

11. Verwendung nach einem der vorhergehenden Ansprüche, wobei die Verkleidung einen gewebten Schleier, einen gewebten Glasschleier, einen Vliesschleier, einen Glasvliesschleier, einen beschichteten Schleier, eine Kraftschicht, eine metallisierte Schicht, eine Aluminiumschicht, eine PET-Schicht und/oder ein faseriges Verstärkungsgittergewebe umfasst.

12. Verwendung nach einem der vorhergehenden Ansprüche, wobei die Verkleidung einen Farbstoff umfasst, welcher die Verkleidung verdunkelt.

13. Verwendung nach einem der vorhergehenden Ansprüche, wobei die Verkleidung vor dem Auftragen des Haftmittels in Teilchenform ein Flächengewicht im Bereich von 30 g/m² bis 350 g/m², vorzugsweise im Bereich von 50 g/m² bis 150 g/m², aufweist.

14. Verwendung nach einem der vorhergehenden Ansprüche, wobei die Verkleidung im Wesentlichen einen Glasschleier umfasst oder daraus besteht und eine Dicke aufweist, welche ≥ 0,3 mm und ≤ 0,6 mm beträgt.

15. Verwendung nach einem der vorhergehenden Ansprüche, wobei, wenn die Verkleidung von der Mineralwolldecke in einem Schältest entfernt wird, der Anteil des Oberflächenbereichs der Verkleidung, an welchem Mineralwollfasern befestigt verbleiben, ≥ 70%, vorzugsweise ≥ 80%, mehr bevorzugt ≥ 90% und noch mehr bevorzugt ≥ 95% der Gesamtoberfläche der Verkleidung beträgt.

## Revendications

1. Utilisation d'un adhésif sous forme particulaire pour fixer un revêtement sur une surface principale d'une couverture de laine minérale et dans laquelle l'utilisation de l'adhésif est une utilisation pour fournir une résistance élevée au pelage tout en permettant au revêtement de s'adapter à la surface de la laine minérale et de conserver une flexibilité souhaitée lors de la fixation du revêtement sur la surface principale d'une couverture de laine minérale ;
et dans laquelle le revêtement est fixé par un procédé de fabrication d'un produit isolant en laine minérale comprenant une couverture de laine minérale ayant un revêtement fixé sur l'une de ses surfaces principales, le procédé comprenant la fixation d'une surface enduite d'adhésif du revêtement sur l'une des surfaces principales de la couverture de laine minérale par application de chaleur et de pression, la surface enduite d'adhésif du revêtement comprenant un adhésif sous forme particulaire ;
et dans laquelle le procédé comprend, séquentiellement;
a) appliquer l'adhésif sous forme particulaire sur une surface principale du revêtement ;
b) fixer l'adhésif sous forme particulaire sur la surface principale du revêtement en appliquant de la chaleur pour fournir la surface enduite d'adhésif du revêtement ;
c) la fixation de la surface enduite d'adhésif du revêtement sur l'une des surfaces principales de la couverture de laine minérale par application de chaleur et de pression.

2. Utilisation selon la revendication 1, dans laquelle le revêtement est fixé par un procédé comprenant en outre
conditionner le revêtement sur lequel l'adhésif sous forme particulaire a été fixé, notamment en enroulant le revêtement sous forme de cylindre puis en déballant le revêtement avant de fixer la surface enduite d'adhésif du revêtement sur l'une des surfaces principales de la couverture de laine minérale par application de chaleur et de pression.

3. Utilisation selon l'une quelconque revendication précédente,
dans laquelle l'adhésif sous forme particulaire est choisi parmi : le polyéthylène, le polypropylène, le copolyester PES, l'EVA, l'époxy-polyester, un adhésif thermodurcissable et une combinaison de ceux-ci.

4. Utilisation selon la revendication 3,
dans laquelle l'adhésif sous forme particulaire comprend un adhésif thermodurcissable ; et
dans lequel la fixation de la surface enduite d'adhésif du revêtement sur l'une des surfaces principales de la couverture de laine minérale par application de chaleur et de pression comprend le durcissement de l'adhésif thermodurcissable.

5. Utilisation selon l'une quelconque revendication précédente,
dans laquelle la fixation de la surface enduite d'adhésif du revêtement sur l'une des surfaces principales de la couverture de laine minérale est réalisée en faisant passer la couverture de laine minérale et le parement dans un four de durcissement, notamment en faisant passer la couverture de laine minérale et le revêtement à travers une portion du four de réticulation à une température ≥ 180° C, de préférence ≥ 200°C pendant une durée qui est ≥ 20 secondes, de préférence ≥ 130 secondes et de préférence ≤ 5 minutes.

6. Utilisation selon l'une quelconque revendication précédente,
dans laquelle la fixation de la surface enduite d'adhésif du revêtement sur l'une des surfaces principales de la couverture en laine minérale comprend le pressage du revêtement entre la couverture en laine minérale et un tambour chauffé.

7. Utilisation selon la revendication 6,
dans laquelle le tambour chauffé a une température de surface ≥ 40°C, de préférence ≥ 50°C et dans lequel le revêtement est pressé entre la couverture de laine minérale et le tambour chauffé pendant une durée ≥ 2 secondes, de préférence ≥ 10 secondes et de préférence ≤ 30 secondes.

8. Utilisation selon l'une quelconque revendication précédente,
dans laquelle la fixation de l'adhésif sous forme particulaire sur la surface principale du revêtement comprend le chauffage de l'adhésif sous forme particulaire à une température qui est ≥ 50°C et de et de préférence ≤ 250°C.

9. Utilisation selon l'une quelconque revendication précédente,
dans laquelle l'adhésif sous forme particulaire est choisi parmi :
i) un adhésif sous forme particulaire qui a une taille de particule telle que ≥ 90 % en poids des particules ont une taille de particule comprise dans la plage : 20 µm à 550 µm ; 20 µm à 350 µm ; 20 µm à 150 µm ; 70 µm à 350 µm ; ou 90 µm à 550 µm ; et
ii) un adhésif sous forme particulaire qui a une taille moyenne de particules comprise entre 20 et 550 µm.

10. Utilisation selon l'une quelconque revendication précédente,
dans laquelle la quantité d'adhésif sous forme particulaire appliquée sur le revêtement appliquée sur le revêtement est ≥ 5g/m² et de préférence ≤ 30g/m².

11. Utilisation selon l'une quelconque revendication précédente,
dans laquelle le revêtement comprend un voile tissé, un voile de verre tissé, un voile non tissé, un voile de verre non tissé, un voile enduit, une couche kraft, une couche métallisée, une couche d'aluminium, une couche de PET et/ou un canevas de renfort fibreux.

12. Utilisation selon l'une quelconque revendication précédente,
dans laquelle le revêtement comprend un agent colorant qui fonce le revêtement.

13. Utilisation selon l'une quelconque revendication précédente,
dans laquelle avant application de l'adhésif sous forme particulaire, le revêtement présente un grammage compris entre 30 g/m² et 350 g/m²; de préférence compris entre 50 g/m² et 150 g/m².

14. Utilisation selon l'une quelconque revendication précédente,
dans laquelle le revêtement comprend ou est constitué essentiellement d'un voile de verre et ayant une épaisseur qui est ≥ 0,3 mm et ≤ 0,6 mm.

15. Utilisation selon l'une quelconque revendication précédente,
dans laquelle lorsque le revêtement est retiré de la couverture de laine minérale lors d'un test de pelage, la proportion de la surface du revêtement à laquelle les fibres de laine minérale restent fixées est ≥ 70%, de préférence ≥80%, de préférence encore ≥ 90% et encore plus préférentiellement ≥95% de la surface totale du revêtement.
